# EUROPÄISCHE PATENTSCHRIFT

(11) **EP 3 600 774 B1**
(45) Veröffentlichungstag und Bekanntmachung des Hinweises auf die Patenterteilung: **01.09.2021**
(21) Anmeldenummer: 18703007.7
(22) Anmeldetag: 02.02.2018
(51) Int. Cl.: B25B 27/00, B25B 27/06

(54) **DEMONTAGEWERKZEUG FÜR EINEN FILTEREINSATZ EINES FLÜSSIGKEITSFILTERS**
REMOVAL TOOL FOR A FILTER INSERT OF A LIQUID FILTER
OUTIL DE DÉMONTAGE D'UNE CARTOUCHE FILTRANTE D'UN FILTRE À LIQUIDE

(30) Priorität: 28.03.2017 DE 102017205237
(43) Veröffentlichungstag der Anmeldung: 05.02.2020
(73) Patentinhaber: Robert Bosch GmbH, 70442 Stuttgart (DE)
(72) Erfinder: ARIAS ARIAS, Jose Luis, 28007 Madrid (ES); BALLESTE IZUZQUIZA, Elena, 28016 Madrid (ES)
(86) Internationale Anmeldenummer: PCT/EP2018/052653
(87) Internationale Veröffentlichungsnummer: WO 2018/177630

(56) Entgegenhaltungen:
- US-A- 4 507 837
- US-A1- 2015 174 746
- US-B1- 9 038 254
- US-B1- 9 579 779

## Beschreibung

### Gebiet der Erfindung

Die Erfindung betrifft ein Demontagewerkzeug für einen Filtereinsatz eines Flüssigkeitsfilters. Die Erfindung betrifft weiterhin ein Verfahren zur Demontage eines Filtereinsatzes eines Flüssigkeitsfilters.

### Stand der Technik

Aus dem Stand der Technik sind Flüssigkeitsfilter bekannt. Derartige Flüssigkeitsfilter können beispielsweise im Automobilbereich dazu eingesetzt werden, Kraftstoff von Partikeln und Wasser zu reinigen. Andere Flüssigkeitsfilter sind dafür ausgelegt, Harnstofflösung zu reinigen, welche für DENOX-Systeme bzw. SCR-Systeme, also zur Stickoxidreduzierung verwendet wird. Derartige Flüssigkeitsfilter bestehen üblicherweise aus einem Gehäuse, einem Zulauf für die Flüssigkeit und einem Ablauf der gereinigten Flüssigkeit. Im Gehäuse des Flüssigkeitsfilters kann ein wechselbarer Filtereinsatz vorgesehen sein. Dieser Filtereinsatz kann beispielsweise aus einem Filterelement gebildet sein, welches zwischen einer ersten Endkappe und einer zweiten Endkappe befestigt ist. Die erste Endkappe kann eine erste Öffnung aufweisen und die zweite Endkappe kann eine zweite Öffnung aufweisen.

Um stets eine ausreichende Filtrierung der Flüssigkeit zu bewirken kann es notwendig sein, den Filtereinsatz nach einer gewissen Zeitdauer oder einer Kilometerleistung des Fahrzeugs zu wechseln. Zu diesem Zweck kann entweder der ganze Flüssigkeitsfilter ausgetauscht werden, was jedoch kostenintensiv ist. Alternativ kann vorgesehen sein, lediglich den Filtereinsatz aus dem Gehäuse zu entfernen.

Zu diesem Zweck kann ein sogenanntes Demontagewerkzeug vorgesehen sein. Derartige Demontagewerkzeuge können beispielsweise dem Austauschfiltereinsatz beigelegt werden, um den in Gebrauch befindlichen Filtereinsatz schnell, sicher und beschädigungsfrei aus dem Gehäuse des Flüssigkeitsfilters zu entfernen.

Ein derartiges Demontagewerkzeug kann beispielsweise einstückig in der Form eines flachen, sich entlang einer Längsachse erstreckenden länglichen Stils (ähnlich eines Eisstils) ausgebildet sein. An einem distalen Ende kann das Demontagewerkzeug einen oder zwei Haken aufweisen. Das Demontagewerkzeug kann für den Demontagevorgang durch die beiden Öffnungen der ersten und der zweiten Endkappe des Filtereinsatzes hindurch gesteckt werden. Die Haken des Demontagewerkzeugs verrasten hinter einem Rand der entlang der Einsteckrichtung betrachtet stromabwärts gelegenen Öffnung der stromabwärts gelegenen Endkappe. Der Ausdruck "stromabwärts" ist dabei lediglich zur Angabe einer Position bezüglich einer Richtung zu verstehen. Wird nun am Demontagewerkzeug entgegen der Einsteckrichtung ein Zug ausgeübt, so kann der Filtereinsatz vollständig aus dem Gehäuse des Flüssigkeitsfilters herausgezogen werden. Durch die Verrastung des Demontagewerkzeugs hinter der bezüglich der Einsteckrichtung weitest entfernten Öffnung der weitest entfernten Endkappe des Filtereinsatzes wird gewährleistet, dass der komplette Filtereinsatz aus dem Gehäuse entfernt werden kann. Würde das Demontagewerkzeug lediglich hinter der bezüglich der Einsteckrichtung betrachtet vorderen Öffnung verrasten, so bestünde die Gefahr, dass beim Herausziehen des Demontagewerkzeugs das Filterelement, welches flüssigkeitsdurchtränkt sein kann, reißt und auf diese Weise ein Teil des Filtereinsatzes im Gehäuse stecken bleibt.

Aus der DE 10 2015 207 565 A1 ist ein Demontagewerkzeug für einen Filtereinsatz eines Flüssigkeitsfilters bekannt. Ebenso sind solche Demontagewerkzeuge aus der US 9 038 254 B1 und US 2015/174746 A1 bekannt.

### Offenbarung der Erfindung

Die Erfindung geht aus von der Erkenntnis, dass bei der Verwendung von einteiligen Demontagewerkzeugen entweder eine spezielle Geometrie im Inneren des Filtereinsatzes vorhanden sein muss, um ein Einführen des Demontagewerkzeugs reibungsarm und beschädigungsfrei zu gestalten. Alternativ ist es notwendig, das Demontagewerkzeug derart flexibel bzw. elastisch auszulegen, dass es bei mechanischem Kontakt mit einer Innenseite der Öffnungen der Endkappen bzw. des Filterelements elastisch verformt werden kann und ein weiteres Einführen möglich ist. Diese konstruktiven Bedingungen führen dazu, dass einerseits für jeden Filtereinsatz bzw. jeden Durchmesser der Öffnungen ein eigenes, speziell für den Filtereinsatz konstruiertes, Demontagewerkzeug notwendig ist.

Bei der Gestaltung eines flexiblen bzw. elastischen Demontagewerkzeugs kann darüber hinaus zwar der Einführvorgang bis zum Verrasten des Demontagewerkzeugs am Filtereinsatz einfach durchführbar sein - gleichzeitig wird dadurch jedoch das Risiko erhöht, dass beim Herausziehen bzw. Demontieren des Filtereinsatzes das Demontagewerkzeug in seiner Stabilität nicht ausreicht, um den Filtereinsatz aus dem Gehäuse zu bewegen. Dies kann beispielsweise dann der Fall sein, wenn der Filtereinsatz besonders fest sitzt. In einem solchen Fall kann es vorkommen, dass sich das Demontagewerkzeug aufgrund seiner Elastizität verformt und nicht ausreichend stabil ist, um den Filtereinsatz aus dem Gehäuse heraus zu bewegen. Somit können mehrere Versuche notwendig sein, um die Demontage des Filtereinsatzes aus dem Gehäuse zu vollenden. Dadurch steigt auch das Risiko, beim erneuten Einführen des Demontagewerkzeugs das Filterelement zu beschädigen, wodurch wiederum das Risiko steigen kann, dass der Filtereinsatz nicht vollständig aus dem Gehäuse entfernt werden kann.

Bei einem herkömmlichen Demontagewerkzeug kann auch das sichere Einführen des Demontagewerkzeugs bis zum Verrasten hinter der Öffnung der Endkappe problematisch sein. Denn beim Herstellungsprozess des Filtereinsatzes kann es vorkommen, dass beim Aufkleben der Endkappe auf das Filterelement bzw. beim Verschweißen der Endkappe mit dem Filterelement der Durchmesser der Öffnung durch Klebematerial bzw. Schmelzmasse verringert wird. In einem derartigen Fall kann es die Flexibilität bzw. Elastizität des Demontagewerkzeugs an seinem distalen Ende quer zur Einsteckrichtung nicht ausreichend groß sein, um das Demontagewerkzeug zuverlässig durch die Öffnung derart hindurch zu bewegen, dass die Haken des Demontagewerkzeugs hinter dem Rand der Öffnung einrasten. Es besteht das Risiko einer Beschädigung des Filtereinsatzes oder dass einer der Haken des Demontagewerkzeugs sich verformt oder abbricht. Ist andererseits die Elastizität am distalen Ende ausreichend groß, so kann es beim Ausziehvorgang zu dem oben beschrieben Abrutschen kommen.

Es kann daher ein Bedarf bestehen, ein Demontagewerkzeug bereitzustellen, welches ausreichend flexibel bzw. elastisch an seinem distalen Ende ausgebildet ist, um leicht und beschädigungsfrei durch den Filtereinsatz hindurchgeführt werden zu können. Gleichzeitig soll das Demontagewerkzeug beim Ausziehvorgang eine ausreichende Stabilität bzw. Steifigkeit an seinem distalen Ende aufweisen, so dass ein Abrutschen auch bei festsitzenden Filtereinsätzen verhindert ist.

Das Demontagewerkzeug soll auch derart elastisch bzw. flexibel sein, dass auch bei größeren Toleranzen des Öffnungsdurchmessers in Folge von Toleranzen im Fertigungsprozess ein sicheres Durchführen durch die Öffnung der Endkappe hindurch ohne größeren Kraftaufwand und ohne Beschädigung des Demontagewerkzeugs oder des Filtereinsatzes zuverlässig ermöglicht wird und anschließend ein sicheres Verrasten hinter dem Rand der Öffnung der Endkappe ermöglicht ist. Schließlich soll das Demontagewerkzeug einfach und kostengünstig herstellbar sein.

### Vorteile der Erfindung

Dieser Bedarf kann durch den Gegenstand der vorliegenden Erfindung gemäß den unabhängigen Ansprüchen gedeckt werden. Vorteilhafte Ausführungsformen der vorliegenden Erfindung sind in den abhängigen Ansprüchen beschrieben.

Gemäß einem ersten Aspekt der Erfindung wird ein Demontagewerkzeug für einen Filtereinsatz eines Flüssigkeitsfilters vorgeschlagen. Das Demontagewerkzeug umfasst einen Körper, der sich entlang einer Längsachse erstreckt. Dabei weist der Körper an einem distalen Ende einen ersten Arm und einen zweiten Arm auf. Die beiden Arme erstrecken sich im Wesentlichen parallel zur Längsachse und sind voneinander beabstandet, z.B. in der Form von zwei Gabelzinken. Die beiden Arme sind elastisch reversibel aufeinander zu auslenkbar, z.B. in einer Richtung quer zur Längsachse. Dabei ist vorgesehen, dass am ersten Arm ein Sicherungselement angeordnet ist, wobei in einem geöffneten Zustand des Sicherungselements die beiden Arme aufeinander zu bewegt werden können, wobei in einem geschlossenen Zustand des Sicherungselements das Sicherungselement die beiden Arme miteinander koppelt und eine Bewegung der beiden Arme aufeinander zu blockiert ist.

Der Begriff "Umfassen" ist hierbei als synonym mit dem Begriff "aufweisen" zu verstehen.

Im geöffneten Zustand des Sicherungselements kann das Sicherungselement z.B. nicht mit dem zweiten Arm gekoppelt sein.

Unter dem Ausdruck "im Wesentlichen parallel zur Längsachse" werden dabei Richtungen verstanden, die um bis zu +/-20° von der Längsachse abweichen können.

Unter dem Begriff "elastisch reversibel" wird dabei verstanden, dass die beiden Arme des Demontagewerkzeugs bei einer Krafteinwirkung quer zur Längsachse aufeinander zu ausgelenkt werden können und nach Beendigung der Krafteinwirkung in ihre ursprüngliche Position zurückfedern. Eine plastische Verformung soll dabei nicht entstehen. Eine derartige elastisch reversible Bewegung kann beispielsweise beim Hindurchstecken durch eine Öffnung einer Endkappe eines Filtereinsatzes auftreten, wobei die Öffnung einen geringeren Durchmesser hat als der Abstand zwischen den beiden Enden der beiden Arme in einer Richtung quer zur Längsachse.

Mit anderen Worten: Es wird ein Demontagewerkzeug vorgeschlagen, welches im geöffneten Zustand des Sicherungselements ausreichend flexibel ist, um auch durch eine enge Öffnung einer Endkappe eines Filtereinsatzes hindurchgeschoben werden zu können, ohne dass dabei die beiden Arme des Demontagewerkzeugs oder ein Tell des Filtereinsatzes beschädigt werden. Um das Demontagewerkzeug anschließend zusammen mit dem Filtereinsatz aus einem Gehäuse eines Flüssigkeitsfilters hinaus zu befördern, wird das Sicherungselement in den geschlossenen Zustand verlagert. In diesem geschlossenen Zustand koppelt das Sicherungselement die beiden Arme miteinander, zumindest dann, wenn eine Krafteinwirkung auf die beiden Arme ausgeübt wird, welche die beiden Arme aufeinander zu bewegt, z.B. eine Kraft quer zur Längsachse. Wird diese Kraft ausgeübt, so stützt sich der zweite Arm am Sicherungselement ab und kann nicht weiter auf den ersten Arm hin bewegt werden und umgekehrt. Auf diese Weise wird ein Verringern des Abstands zwischen dem ersten Arm und dem zweiten Arm verhindert, wodurch ein Abrutschen des Demontagewerkzeugs beim Herausziehen des Filtereinsatzes aus dem Flüssigkeitsfilter verhindert wird.

Vorteilhaft wird durch das Vorsehen des Sicherungselements bewirkt, dass das Demontagewerkzeug im Bereich der beiden Arme eine größere Elastizität bzw. Flexibilität aufweisen kann. Beispielsweise kann eine Kerbe zwischen den beiden Armen im Vergleich zu herkömmlichen Demontagewerkzeugen länger ausgeführt sein, wodurch die Formelastizität verbessert wird. In anderen Beispielen kann ein flexibleres Material oder ein dünnerer Querschnitt verwendet werden, um zu einer größeren Flexibilität zu kommen. Auf diese Weise lässt sich das Demontagewerkzeug leichter und zuverlässig beschädigungsfrei durch den Filtereinsatz hindurchführen. Gleichzeitig wird im geschlossenen Zustand des Sicherungselements das Demontagewerkzeug mechanisch derart stabilisiert, dass ein Abrutschen beim Ausziehvorgang vermieden wird. Auf diese Weise werden die Anforderungen eines einerseits beschädigungsfreien und leichten Einführens des Demontagewerkzeugs und andererseits des zuverlässigen und sicheren Herausziehens des Filtereinsatzes ohne ein Abrutschen des Demontagewerkzeugs gleichzeitig erfüllt.

In einer Weiterbildung ist vorgesehen, dass der erste Arm einen ersten Haken aufweist, wobei der erste Haken im Wesentlichen quer zur Längsachse vom ersten Arm abragt. Der zweite Arm weist einen zweiten Haken auf, wobei der zweite Haken im Wesentlichen quer zur Längsachse vom zweiten Arm abragt. Die beiden Haken können dabei beispielsweise in entgegengesetzte Richtungen weisen.

Dadurch wird vorteilhaft bewirkt, dass das Demontagewerkzeug zuverlässig und sicher nach dem Einführen in den Filtereinsatz mit dem Filtereinsatz gekoppelt bzw. mechanisch verbunden werden kann und der Filtereinsatz auf diese Weise aus dem Flüssigkeitsfilter bzw. aus dessen Gehäuse herausgezogen werden kann.

In einer Weiterbildung ist vorgesehen, dass der Körper des Demontagewerkzeugs flach ausgebildet ist. Dabei beträgt eine Gesamtlänge des Körpers wenigstens das 5-fache einer Breite des Körpers. Dabei beträgt die Breite des Körpers wenigstens das 3-fache einer Dicke des Körpers, bevorzugt wenigstens das 4-fache der Dicke und ganz besonders bevorzugt wenigstens das 5-fache der Dicke. Beispielsweise beträgt die Breite das 3-fache der Dicke oder das 3,5-fache der Dicke oder das 4,5-fache der Dicke. Auf diese Weise kann ein besonders leichtes und kostengünstiges Demontagewerkzeug bereitgestellt werden. Durch die vorgeschlagene Form, beispielsweise der Form eines Eisstils oder eines Spatels ähnelnd, ist das derart ausgebildet Demontagewerkzeug leicht handhabbar und kann beschädigungsfrei durch den Filtereinsatz hindurch geführt werden.

In einer Weiterbildung ist vorgesehen, dass das Sicherungselement als ein Bügel ausgebildet ist. Alternativ ist das Sicherungselement als eine Klinke ausgebildet. Weiterhin alternativ ist das Sicherungselement als eine Sperrklinke ausgebildet. Dabei ist der Bügel bzw. ist die Klinke bzw. ist die Sperrklinke am ersten Arm ausgebildet bzw. befestigt bzw. angeordnet. Das Sicherungselement kann sich im geschlossenen Zustand vom ersten Arm hin zum zweiten Arm erstrecken. Dabei kann das Sicherungselement den Abstand zwischen dem ersten Arm und dem zweiten Arm überbrücken. Durch die vorgeschlagene Ausbildung lässt sich das Sicherungselement besonders stabil und einfach ausbilden.

In einer Weiterbildung ist vorgesehen, dass das Sicherungselement mittels eines Drehgelenks am ersten Arm befestigt ist. Dadurch wird vorteilhaft bewirkt, dass das Sicherungselement einfach und mit geringem Kraftaufwand vom geöffneten Zustand in den geschlossenen Zustand bewegt werden kann und auch wieder zurück vom geschlossenen Zustand in den geöffneten Zustand.

Beispielsweise ragt das Sicherungselement im geöffneten Zustand zunächst schräg nach vorne über den Körper des Demontagewerkzeugs hinaus. Unter dem Begriff "nach vorne" ist eine Richtung zu verstehen, welche sich außerhalb der Kontur des Demontagewerkzeugs ohne das Sicherungselement erstreckt, insbesondere in Richtung der Längsachse weisend.

Zur Überführung in den geschlossenen Zustand kann dann das Sicherungselement um das Drehgelenk herum verschwenkt bzw. gedreht werden, so dass es zwischen dem ersten Arm und dem zweiten Arm positioniert wird. Bei einer Krafteinwirkung auf einen oder beide Arme quer zur Längsachse blockiert dann das Sicherungselement in der Art einer Sperrklinke oder eines Bügels (z.B. wie ein Türstopper) eine weitere Bewegung der beiden Arme aufeinander zu, sobald das Sicherungselement in mechanischem Kontakt mit dem zweiten Arm gelangt.

Eine Weiterbildung sieht vor, dass das Drehgelenk als Filmgelenk oder als Scharnier oder als Schnappscharnier ausgebildet ist.

Unter einem Filmscharnier bzw. einem Filmgelenk sind Bandscharniere zu verstehen, die keine (separaten) mechanischen Teile aufweisen. Sie sind als flexible, dünnwandige Gelenkrille zwischen zwei zu verbindenden Teilen ausgebildet. In diesem Fall beispielsweise zwischen dem ersten Arm und dem Sicherungselement.

Durch die Ausbildung als Filmscharnier bzw. als Filmgelenk ist das Drehgelenk besonders preiswert und ohne großen Montageaufwand herstellbar. Außerdem werden Einzelteile eingespart.

Unter einem Schnappscharnier ist eine weiterentwickelte Bauart eines Filmscharniers zu verstehen. Ein Schnappscharnier weist dabei zwei stabile Endlagen auf: einen bzw. den geöffneten und einen bzw. den geschlossenen Zustand.

Ein Schnappscharnier kann lediglich beispielhaft nach dem Prinzip eines federgespannten Viergelenks ausgebildet werden. Dabei werden zusätzlich zur Gelenkrille eines Filmscharniers (erster Drehpunkt) mit Hilfe eines Federelements und mit drei Gelenkrillen die zwei Endlagen erreicht. Dabei kann beim Auslegen des Schnappscharniers darauf geachtet werden, dass das Federelement in den beiden Ruhezuständen nahezu entlastet ist. Die Ausbildung als Schnappscharnier bewirkt vorteilhaft, dass das Sicherungselement zuverlässig in den geöffneten Zustand bzw. in den geschlossenen Zustand verlagert werden kann und dort stabil verbleibt. Dies kann z.B. deshalb von Vorteil sein, da bei der Verwendung eines Demontagewerkzeugs häufig nur eingeschränkte Sichtmöglichkeiten herrschen. Ein Schnappscharnier erzeugt häufig auch eine kleine Vibration bzw. ein kleines Geräusch beim Umschnappen zwischen dem geöffneten zum geschlossenen Zustand bzw. vom geschlossenen zum geöffneten Zustand. Auf diese Weise kann ein Operator bzw. ein Monteur beim Einführen des Demontagewerkzeugs in den Filtereinsatz haptisch oder akustisch feststellen, ob das Sicherungselement vom geöffneten Zustand in den geschlossenen Zustand umgesprungen ist. Weiterhin vorteilhaft wird verhindert, dass das Sicherungselement überdrückt wird, d.h. weiter als in den geschlossenen Zustand verlagert wird.

Besonders vorteilhaft lassen sich ein Filmgelenk oder ein Schnappscharnier einstückig mit dem Demontagewerkzeug ausbilden, beispielsweise in einem Spritzgussprozess. Dadurch lässt sich ein derartiges Demontagewerkzeug ohne großen Kostenaufwand mit verbesserter Funktionalität herstellen.

In einer Weiterbildung ist vorgesehen, dass das Sicherungselement derart am ersten Arm angeordnet ist, dass es im geöffneten Zustand nach vorne vom Körper abragt und einen Winkel von maximal 45° zu einer Querrichtung einschließt. Dabei erstreckt sich die Querrichtung senkrecht zur Längsachse.

Alternativ oder zusätzlich kann vorgesehen sein, dass das Sicherungselement derart am ersten Arm angeordnet ist, dass es im geschlossenen Zustand in der Querrichtung zwischen den beiden Armen verläuft.

Durch die vorgeschlagene Anordnung des Sicherungselements im geöffneten Zustand kann vorteilhaft bewirkt werden, dass das Sicherungselement beim Einführen in den Filtereinsatz ohne weiteres Zutun eines Operators bzw. Monteurs selbstständig in den geschlossenen Zustand überführt wird. Denn beim Erreichen der Endstellung kann das Sicherungselement beispielsweise an einer Gehäusewand bzw. einem Deckel des Flüssigkeitsfilters anstoßen, wobei aufgrund des schräg nach vorne abragenden Sicherungselements das Sicherungselement automatisch in den geschlossenen Zustand überführt wird. Weiterhin wird durch ein um maximal 45° zu einer Querrichtung abragendes Sicherungselement im geöffneten Zustand vorteilhaft bewirkt, dass das Sicherungselement beim Einschieben in den Filtereinsatz nicht wie ein Dorn wirkt und dabei beim Anstoßen an ein Filtermedium bzw. Filterelement bzw. an die Endkappe des Filtereinsatzes entweder selber abbricht oder die angestoßenen Teile beschädigt.

Dadurch, dass das Sicherungselement im geschlossenen Zustand in der Querrichtung zwischen den beiden Armen verläuft, wird eine besonders stabile Blockierung einer Bewegung der beiden Arme aufeinander zu verhindert. Dadurch wird das Demontagewerkzeug im Bereich der beiden Arme im geschlossenen Zustand des Sicherungselements besonders verwindungssteif und mechanisch stabil.

In einer Weiterbildung ist vorgesehen, dass das Sicherungselement im geschlossenen Zustand mit dem zweiten Arm eine lösbare Verbindung ausbildet. Die Verbindung kann dabei beispielsweise formschlüssig (z.B. durch einen Bajonettverschluss oder einen Überwurfbügel) oder kraftschlüssig oder reibschlüssig sein.

Unter dem Begriff "lösbare Verbindung" ist dabei zu verstehen, dass die Verbindung beschädigungsfrei lösbar ist.

Durch die vorgeschlagene lösbare Verbindung wird vorteilhaft bewirkt, dass im geschlossenen Zustand sichergestellt ist, dass sich das Sicherungselement nicht aus Versehen bzw. unbeabsichtigt vom geschlossenen Zustand in den geöffneten Zustand zurück verlagert. Gleichzeitig wird vorteilhaft bewirkt, dass nach Beendigung des Ausziehvorgangs das Sicherungselement vom geschlossenen Zustand wieder in den geöffneten Zustand versetzt werden kann, indem beispielsweise die Reibkraft der reibschlüssigen Verbindung oder eine notwendige Lösekraft bei einer kraftschlüssigen Verbindung überwunden wird oder wobei bei einer formschlüssigen Verbindung, beispielsweise mit einem Bajonettverschluss, der Verschluss wieder geöffnet wird.

Dadurch kann das Demontagewerkzeug wieder verwendet werden, was besonders kostengünstig und umweltschonend ist.

In einer Weiterbildung ist vorgesehen, dass eine erste Länge des ersten Arms von einer ersten Wurzel des ersten Arms am Körper bis zu einem ersten freien Ende des ersten Arms wenigstens das 2,5-fache, bevorzugt wenigstens das 3-fache eines maximalen Abstands zwischen den beiden Armen beträgt.

Alternativ oder zusätzlich ist vorgesehen, dass eine zweite Länge des zweiten Arms von einer zweiten Wurzel des zweiten Arms am Körper bis zu einem zweiten freien Ende des zweiten Arms wenigstens das 2,5-fache, bevorzugt wenigstens das 3-fache eines maximalen Abstands zwischen den beiden Armen beträgt.

Durch diese Ausbildungen wird vorteilhaft bewirkt, dass das Demontagewerkzeug im Bereich seiner beiden Arme besonders formelastisch bzw. flexibel ist. Dadurch wird vorteilhaft der Einschiebevorgang mit besonders wenig Kraft bzw. Widerstand ermöglicht.

Gemäß einem zweiten Aspekt der Erfindung wird ein Verfahren zur Demontage eines Filtereinsatzes eines Flüssigkeitsfilters vorgeschlagen. Der Flüssigkeitsfilter weist im montierten Zustand ein Gehäuse, wenigstens einen Flüssigkeitszulauf, wenigstens einen Flüssigkeitsablauf und den Filtereinsatz auf. Der Filtereinsatz umfasst ein sich entlang einer Längsachse erstreckendes Filterelement, eine erste Endkappe und eine zweite Endkappe. Das Filterelement ist entlang der Längsachse betrachtet zwischen der ersten Endkappe und der zweiten Endkappe angeordnet. Die erste Endkappe weist eine erste kanalartige Öffnung auf und die zweite Endkappe weist eine zweite kanalartige Öffnung auf. Dabei umfasst das Verfahren die folgenden Schritte:
▪ einen ersten Schritt: Bereitstellen eines Demontagewerkzeugs gemäß der obigen Beschreibung;
▪ einen zweiten Schritt: Einstellen des Demontagewerkzeugs in einen geöffneten Zustand, wobei im geöffneten Zustand die beiden Arme des Demontagewerkzeugs elastisch reversibel aufeinander zu bewegbar sind;
▪ einen dritten Schritt: Einführen des Demontagewerkzeugs in den Filtereinsatz entlang einer Einführrichtung derart, dass das distale Ende des Demontagewerkzeugs zumindest die erste Öffnung vollständig hindurch geführt ist, bevorzugt durch die zweite Öffnung und durch die erste Öffnung vollständig hindurch geführt ist;
▪ einen vierten Schritt: Einstellen des Demontagewerkzeugs in einen Demontagezustand durch Verlagern des Sicherungselements, so dass das Sicherungselement zwischen dem ersten Arm und dem zweiten Arm angeordnet ist und bei einer Krafteinwirkung auf einen der Arme hin zu dem anderen Arm eine Bewegung der beiden Arme aufeinander zu blockiert ist;
▪ einen fünften Schritt: Verlagern des Demontagewerkzeugs entgegen der Einführrichtung, so dass zusammen mit dem Demontagewerkzeug der Filtereinsatz aus dem Gehäuse demontiert wird.

Im geöffneten Zustand das Sicherungselement kann z.B. das Sicherungselement nicht mit dem zweiten Arm gekoppelt sein.

Durch das vorgeschlagene Verfahren wird besonders einfach und zuverlässig eine Demontage des Filtereinsatzes aus dem Gehäuse des Flüssigkeitsfilters ermöglicht. Denn einerseits lässt sich das Demontagewerkzeug besonders flexibel gestalten und in den Filtereinsatz einführen. Gleichzeitig wird durch das Verlagern bzw. Umlegen des Sicherungselements das Demontagewerkzeug im Ausführzustand mechanisch versteift bzw. stabilisiert, so dass ein Abrutschen des Demontagewerkzeugs von einem Rand der ersten Öffnung der ersten Endkappe des Filtereinsatzes unterbunden wird. Auf diese Weise lässt sich der Filtereinsatz zuverlässig und einfach und beschädigungsfrei aus dem Gehäuse des Flüssigkeitsfilters entfernen.

### Zeichnungen

Weitere Merkmale und Vorteile der vorliegenden Erfindung werden dem Fachmann aus der nachfolgenden Beschreibung beispielhafter Ausführungsformen, die jedoch nicht als die Erfindung beschränkend auszulegen sind, unter Bezugnahme auf die beigelegten Zeichnungen ersichtlich.

Es zeigen:
- Figs. 1a-1e:: verschiedene Darstellungen eines Demontagewerkzeugs und seiner Verwendung aus dem Stand der Technik;
- Figs. 2a-2c:: schematische Darstellungen eines erfindungsgemäßen Demontagewerkzeugs und seiner Verwendung im Einführzustand und im Demontagezustand;
- Figs. 3a-3c:: schematische Querschnitte durch einen Flüssigkeitsfilter beim Demontageprozess mit dem Demontagewerkzeug im geöffneten Zustand;
- Figs. 3d, 3e:: schematische Querschnitte durch einen Flüssigkeitsfilter beim Demontageprozess mit dem Demontagewerkzeug im geschlossenen Zustand;
- Fig. 4:: Schritte eines Verfahrens zur Demontage eines Filtereinsatzes eines Flüssigkeitsfilters.

Figur la zeigt ein Demontagewerkzeug 60 aus dem Stand der Technik. Das Demontagewerkzeug 60 ist einstückig in der Art eines Eisstils bzw. eines Spatels ausgebildet. Mit anderen Worten: Das Demontagewerkzeug 60 weist eine flache, längliche Erstreckung auf. An einem vorderen distalen Ende 61 weist das Demontagewerkzeug 60 einen ersten Haken 63 und einen zweiten Haken 64 auf, die in der Art zweier Gabelzinken ausgebildet sind. Eine analoge Struktur befindet sich auch am zweiten distalen Ende 62 des Demontagewerkzeugs 60. Das Demontagewerkzeug 60 weist dabei in seinem mittleren Abschnitt zwischen dem ersten Ende 61 und dem zweiten Ende 62 eine Aussparung auf, so dass es möglichst formelastisch und biegbar ist.

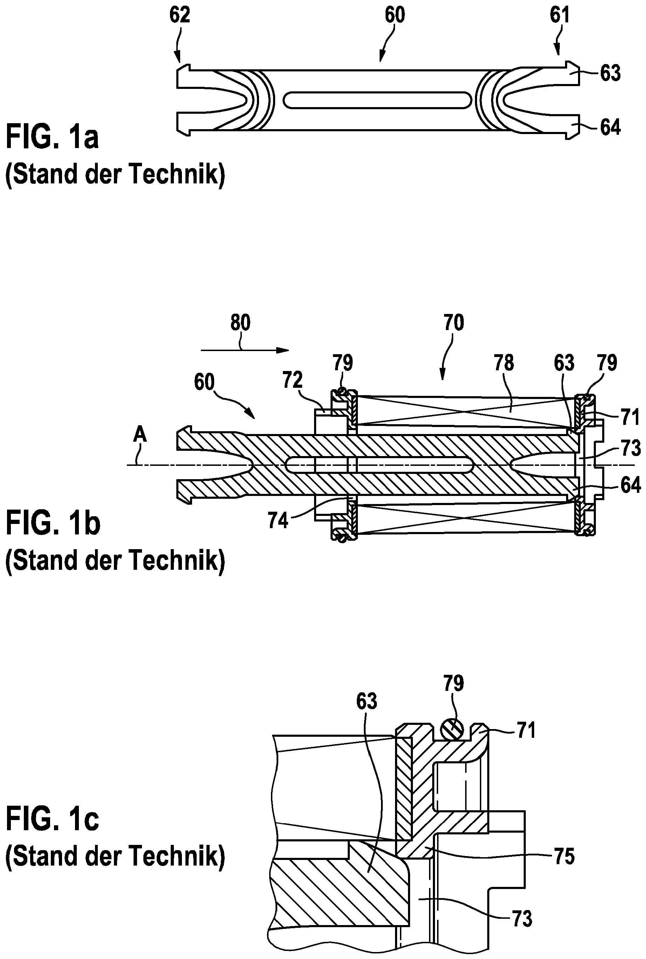

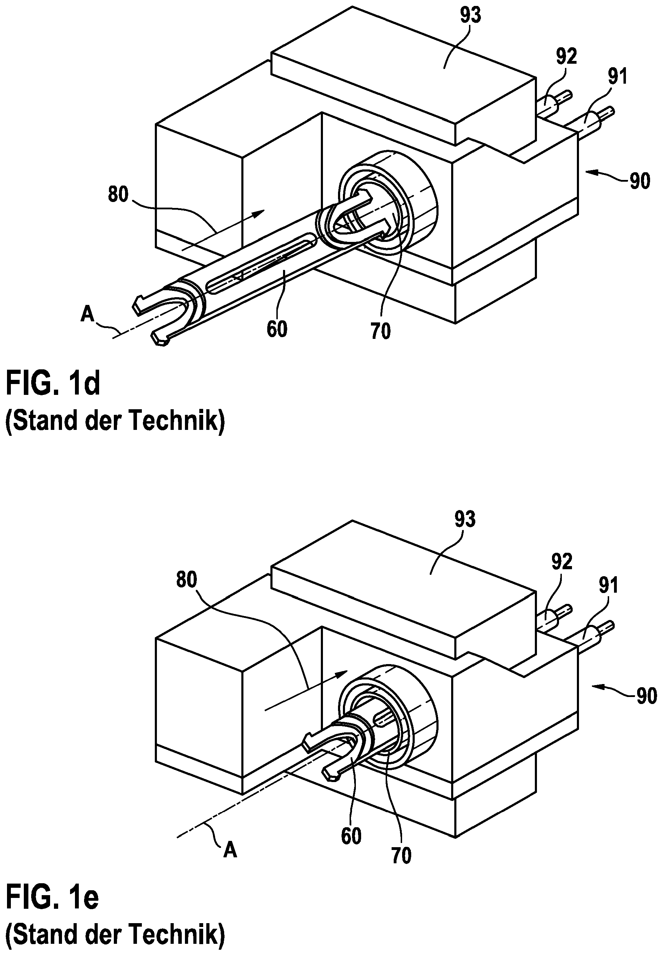

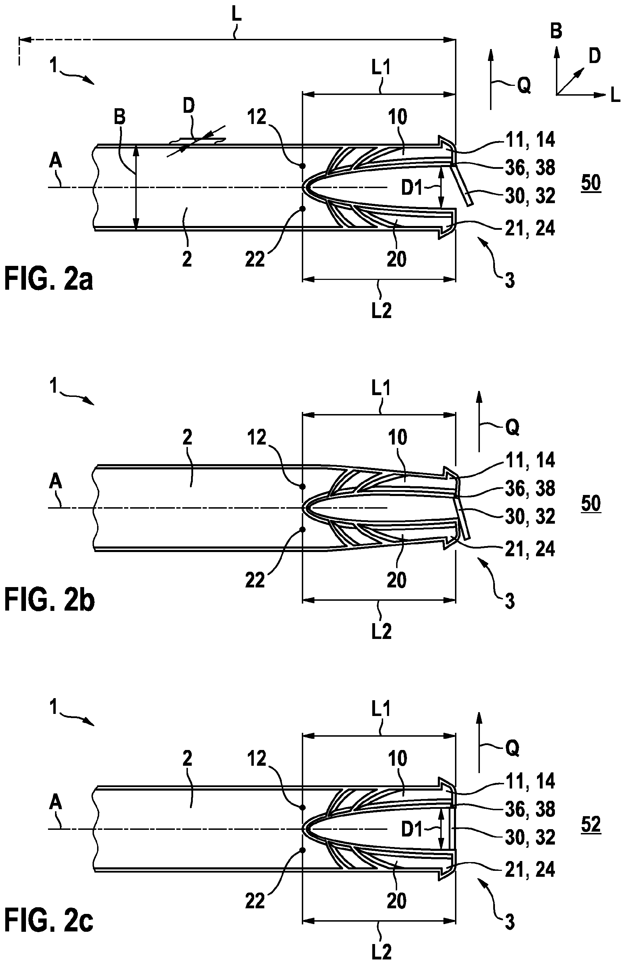

Figur 1b zeigt das Demontagewerkzeug 60 aus dem Stand der Technik beim Einführen entlang einer Einführrichtung 80 in einen Filtereinsatz 70. Der Filtereinsatz 70 weist eine hohlzylindrische Gestalt auf und erstreckt sich entlang einer Längsachse A. Die Längsachse A definiert eine axiale Richtung. Davon zu unterscheiden ist eine radiale Richtung bzw. Querrichtung Q (siehe Figs. 2a-2c), die senkrecht zur Längsachse A verläuft. Der Filtereinsatz 70 umfasst eine erste Endkappe 71 mit einer ersten Öffnung 73 sowie eine zweite Endkappe 72 mit einer zweiten Öffnung 74. Ein Filterelement 78 ist fluiddicht zwischen den beiden Endkappen 71, 72 befestigt. Das Filterelement 78 weist ebenfalls eine hohlzylindrische Form auf, so dass das Demontagewerkzeug 60 entlang der Längsachse A in der Einführrichtung 80 zunächst durch die zweite Öffnung 74 hindurch gesteckt werden kann, dann das hohle Innere des Filterelements 78 passieren kann und schließlich durch die erste Öffnung 73 der ersten Endkappe 71 hindurch gesteckt werden kann. Dabei ist der Abstand der beiden Haken 63, 64 des Demontagewerkzeugs größer als die Durchmesser der ersten Öffnung 73 und der zweiten Öffnung 74. Durch die gabelförmige Ausgestaltung des ersten Endes 61 des Demontagewerkzeugs 60 können die Haken 63, 64 in der Art von Schnapphaken elastisch reversibel beim Auftreffen auf den Rand der jeweiligen Öffnung 73, 74 nach innen ausgelenkt werden und nach Passieren der jeweiligen Öffnung 73, 74 wieder nach außen federn.

Figur 1c zeigt einen vergrößerten Ausschnitt aus der Figur 1b in einem Zustand, bei dem der erste Haken 63 unmittelbar am Rand 75 der ersten Öffnung 73 anliegt, kurz vor dem Passieren der ersten Öffnung 73 beim Einführprozess.

Der Filtereinsatz 70 weist außerdem noch Dichtmittel 79, beispielsweise in Form von O-Ringen 79 auf, die jeweils an einer radialen Außenseite der ersten Endkappe 71 und der zweiten Endkappe 72 angeordnet sind und eine Abdichtung gegen ein Gehäuse 93 eines Flüssigkeitsfilters 90 ermöglichen.

Figur 1d zeigt einen Flüssigkeitsfilter 90 mit einem Gehäuse 93 sowie einem Flüssigkeitszulauf 91 und einem Flüssigkeitsablauf 92. Der Filtereinsatz 70 ist im Gehäuse 93 montiert. Üblicherweise ist der Filtereinsatz 70 von einem Deckel fluiddicht abgedeckt. In der dargestellten Figur soll der Filtereinsatz 70 jedoch aus dem Gehäuse 93 entfernt werden mittels des Demontagewerkzeugs 60 aus dem Stand der Technik. Dargestellt ist der Zustand, bei dem das Demontagewerkzeug 60 unmittelbar vor der Einführung in den Filtereinsatz 70 entlang der Einführrichtung 80 steht.

Figur le zeigt den Flüssigkeitsfilter 90 aus Figur 1d, wobei nun das Demontagewerkzeug 60 derart in den Filtereinsatz 70 eingeführt ist, dass die beiden Haken (nicht dargestellt) den Rand 75 der ersten Öffnung 73 (nicht dargestellt) des Filtereinsatzes 70 hintergreifen. Durch eine Verlagerung des Demontagewerkzeugs 60 entgegen der Einsteckrichtung 80 kann nun das Demontagewerkzeug 60 mitsamt dem Filtereinsatz 70 aus dem Flüssigkeitsfilter 90 entfernt werden.

Bei dem Flüssigkeitsfilter 90 kann es sich beispielsweise um einen Kraftstofffilter, z.B. für Öl, Diesel oder Benzin handeln. Ebenfalls ist möglich, dass der Flüssigkeitsfilter 90 als Filter zur Filtrierung von Harnstofflösung in einem DENOX-System bzw. SCR-System (SCR = "selective catalytic reduction") vorgesehen ist. Auch andere Verwendungen des Flüssigkeitsfilters 90 sind denkbar.

Die Figuren 2a, 2b und 2c zeigen einen Ausschnitt eines erfindungsgemäßen Demontagewerkzeugs 1 für einen Filtereinsatz 70 eines Flüssigkeitsfilters 90.

Das Demontagewerkzeug 1 umfasst dabei einen Körper, der sich entlang einer Längsachse A erstreckt. Der Körper 2 weist an einem distalen Ende 3 einen ersten Arm 10 und einen zweiten Arm 20 auf. Die beiden Arme 10, 20 erstrecken sich im Wesentlichen parallel zur Längsachse A und sind voneinander beabstandet, in der Art von zwei Gabelzinken. Die Beabstandung weist entlang einer zur Längsachse A senkrechten Querrichtung Q bzw. Querachse Q einen maximalen Abstand Dl auf. Am ersten Arm 10 ist ein Sicherungselement 30, 32 angeordnet.

Grundsätzlich kann das Demontagewerkzeug an dem in den Abbildungen auf der linken Seite fehlenden zweiten distalen Ende analog zu dem distalen Ende 3 ausgebildet sein.

In den Figuren 2a und 2b ist das Sicherungselement 30, 32 in einem geöffneten Zustand 50 bzw. in einer geöffneten Stellung 50 dargestellt, in Figur 2c in einem geschlossenen Zustand 52 bzw. in einer geschlossenen Stellung 52.

In den Figuren 2b und 2c ist das Demontagewerkzeug 1 aus Figur 2a zu erkennen, wobei die beiden Arme 10, 20 in Figur 2b elastisch reversibel aufeinander zu ausgelenkt sind. In den Figuren 2a und 2b ragt das Sicherungselement 30, 32 im geöffneten Zustand 50 schräg nach vorne vom ersten Arm 10 ab. Es kann dabei zwischen seiner Erstreckungsrichtung und der Querachse Q bzw. Querrichtung Q durch seine Wurzel z.B. einen Winkel von maximal 45° einschließen, im dargestellten Beispiel ca. 30°. Das Sicherungselement 30 kann dabei in der Art eines Bügels 32 bzw. einer Klinke 32 bzw. einer Sicherungsklinke 32 ausgebildet sein. Das Sicherungselement 30, 32 kann am ersten Arm 10 mittels eines Drehgelenks 36 (an seiner Wurzel) angeordnet bzw. befestigt sein. Das Drehgelenk 36 kann beispielsweise in der Art eines Filmgelenks 28, eines Filmscharniers, eines Scharniers oder eines Schnappscharniers ausgebildet sein.

In Figur 2c ist das Sicherungselement 30, 32 von dem geöffneten Zustand 50 in den geschlossenen Zustand 52 verlagert bzw. überführt worden. Dazu ist das Sicherungselement 30, 32 um das Drehgelenk 36, 38 herum nach hinten, d.h. in Richtung des Körpers 2, verschwenkt bzw. gedreht worden. Das Sicherungselement 30, 32 ist im geschlossenen Zustand 52 nun zwischen den beiden Armen 10, 20 angeordnet und koppelt die beiden Arme 10, 20 miteinander. Diese Kopplung ist derart ausgebildet, dass bei einer Krafteinwirkung auf einen oder beide Arme 10, 20 entlang der Querrichtung Q hin zum jeweils anderen Arm 20, 10 eine Bewegung der beiden Arme 10, 20 aufeinander zu blockiert ist. Dabei kann zunächst noch ein geringer Spalt zwischen dem Sicherungselement 30, 32 und dem zweiten Arm ausgebildet sein, der jedoch durch die Krafteinwirkung geschlossen wird. Sobald das Sicherungselement 30, 32 in mechanischen Kontakt mit dem zweiten Arm 20 tritt ist die weitere Bewegung des ersten Arms 10 relativ zum zweiten Arm 20 in der Querrichtung Q blockiert. Das Sicherungselement 30, 32 wirkt dabei als eine Art Sperrklinke und stabilisiert das Demontagewerkzeug 1 in der Querrichtung Q.

Das Sicherungselement 30, 32 kann dabei derart ausgelegt sein, dass es im geschlossenen Zustand die Verringerung eines maximalen Abstands Dl zwischen den beiden Armen 10, 20 in einem kraftfreien Zustand um mehr als 10% dieses maximalen Abstands Dl verhindert. Mit anderen Worten: im geschlossenen Zustand 52 des Sicherungselements 30, 32 ist eine Verringerung des maximalen Abstands zwischen den Armen 10, 20 auf weniger als 90% des maximalen Abstands Dl im kraftfreien Zustand verhindert. Bevorzugt ist eine Verringerung auf weniger als 95% des maximalen Abstands Dl im kraftfreien Zustand verhindert und ganz besonders bevorzugt auf weniger als 98% des maximalen Abstands Dl im kraftfreien Zustand verhindert.

Das Demontagewerkzeug 1 weist am ersten Arm 10 einen ersten Haken 11 auf und am zweiten Arm 20 einen zweiten Haken 21. Dabei ragen der erste Haken 11 und der zweite Haken 21 im Wesentlichen quer zur Längsachse A vom ersten Arm 10 bzw. vom zweiten Arm 20 ab. Die beiden Haken 11, 21 weisen dabei im Ausführungsbeispiel in entgegengesetzte Richtungen.

Das Demontagewerkzeug 1 ist bevorzugt flach ausgebildet, d.h. eine Gesamtlänge L des Körpers 2 beträgt wenigstens das 5-fache einer Breite B des Körpers 2, wobei sich die Breite B in der Querrichtung Q erstreckt und die Gesamtlänge L entlang der Längsachse A. Weiterhin beträgt die Breite B des Körpers 2 wenigstens des 3-fache, bevorzugt wenigstens das 5-fache, einer Dicke D des Körpers 2. Die Dicke D erstreckt sich dabei in einer Richtung, die senkrecht zur Längsachse A und senkrecht zur Querachse Q verläuft. Die Richtungen der Gesamtlänge L, der Breite B und der Dicke D sind in dem kleinen Koordinatensystem angegeben, welches in der Figur 2a dargestellt ist. In den Figuren 2a bis 2c ist lediglich eine Seite des Demontagewerkzeugs 1 mit einem distalen Ende 3 dargestellt. Die Gesamtlänge L erstreckt sich von dem einem distalen Ende 3 bis zum anderen distalen Ende (hier nicht dargestellt), wobei das Sicherungselement 30, 32 in die Gesamtlänge L nicht eingerechnet wird.

Eine erste Länge L1 des ersten Arms 10 kann z.B. mindestens das 2,5-fache oder mindestens das 3-fache oder sogar mindestens das 3,5-fache des maximalen Abstand Dl (im kraftfreien Zustand) zwischen den beiden Armen 10, 20 betragen, z.B. das 2,5-fache oder das 3-fache des maximalen Abstands D1. In gleicher Weise kann eine zweite Länge L2 des zweiten Arms 20 z.B. mindestens das 2,5-fache oder mindestens das 3-fache oder sogar mindestens das 3,5-fache des maximalen Abstand Dl zwischen den beiden Armen 10, 20 betragen, z.B. das 2,5-fache oder das 3-fache des maximalen Abstands D1. Durch das Vorsehen des Sicherungselements 30, 32 können die erste und zweite Länge L1, L2 im Verhältnis zum maximalen Abstand Dl der Arme 10, 20 größer gewählt werden als bei herkömmlichen Demontagewerkzeugen. Dadurch wird eine verbesserte Formelastizität bewirkt, d.h. das Demontagewerkzeug kann mit weniger Kraftaufwand durch enge Öffnungen geschoben werden, da die Arme 10, 20 weiter und leichter elastisch reversibel ausgelenkt werden können. Durch das Schließen des Sicherungselements 30, 32 ist das Demontagewerkzeug 1 dann jedoch mindestens genauso formstabil und verwindungssteif und abrutschsicher wie herkömmliche Demontagewerkzeuge 1.

Dabei werden die erste Länge L1 von einer ersten Wurzel 12 des ersten Arms 10 am Körper 2 bis zu einem ersten freien Ende 14 des ersten Arms 10 gemessen. In gleicher Weise wird die zweite Länge L2 des zweiten Arms 20 von einer zweiten Wurzel 22 des zweiten Arms 20 am Körper 2 bis zu einem zweiten freien Ende 24 des zweiten Arms 20 gemessen. Als Wurzel 12, 22 kann dabei z.B. jeweils derjenige Punkt bzw. Abschnitt des Körpers 2 betrachtet werden, an welchem der erste Arm 10 vom zweiten Arm 20 nicht mehr beabstandet ist.

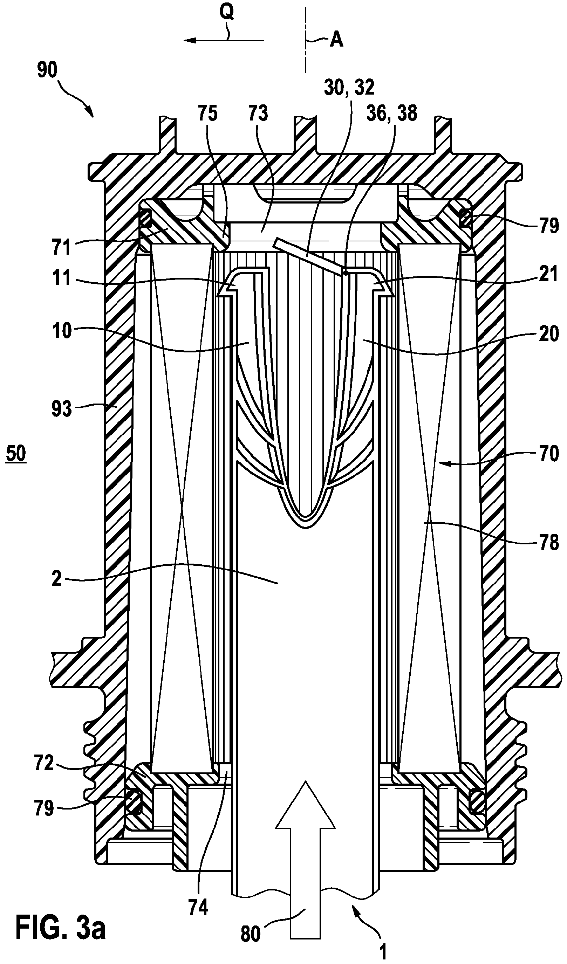

Die Figuren 3a bis 3e zeigen einen Demontagevorgang eines Filtereinsatzes 70 im Gehäuse 93 eines Flüssigkeitsfilters 90 mit Hilfe des Demontagewerkzeugs 1. Dabei ist der Flüssigkeitsfilter 90 in einem Querschnitt dargestellt.

Der Flüssigkeitsfilter 90 umfasst das Gehäuse 93 sowie den Filtereinsatz 70. Der Filtereinsatz 70 ist analog zu dem Filtereinsatz 70 aus Fig. 1b aufgebaut.

In den Figuren 3a bis 3c ist das Einführen des Demontagewerkzeugs 1 entlang einer Einsteckrichtung 80 bzw. Einführrichtung 80 dargestellt. Die Einführrichtung 80 verläuft dabei im Wesentlichen parallel zur Längsachse A.

In den Figuren 3a bis 3c ist das Sicherungselement 30 in der Form eines Bügels 32 bzw. einer Klinke bzw. einer Sperrklinke 32 ausgebildet und befindet sich im geöffneten Zustand 50. Das Sicherungselement 30 ragt somit nach vorne vom Demontagewerkzeug 1 ab.

In Figur 3a ist das Demontagewerkzeug 1 mit seinen beiden Haken 11, 21 durch die zweite Öffnung 74 der zweiten Endkappe 72 hindurchgesteckt und befindet sich im Innern des Filtereinsatzes 70.

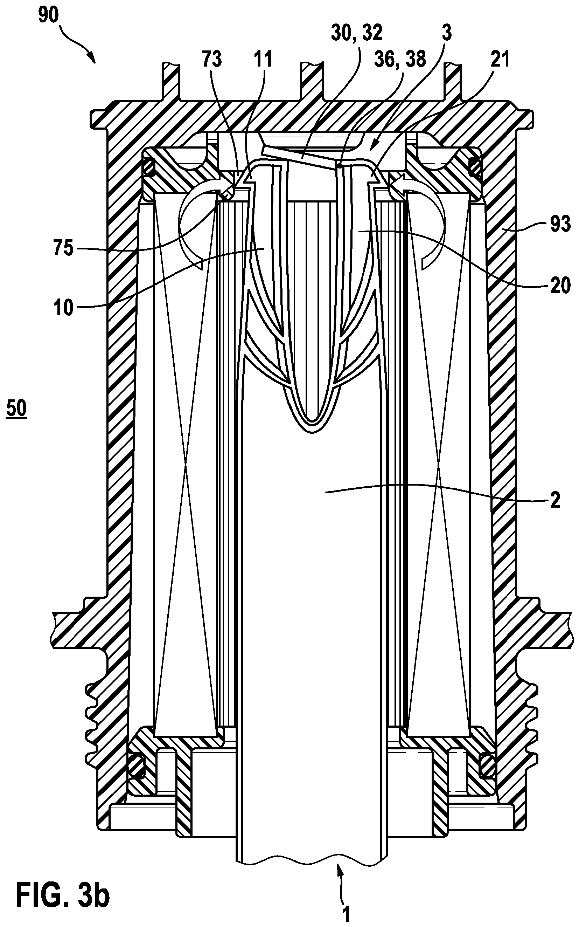

In Figur 3b ist dargestellt, wie das Demontagewerkzeug 1 in einem geöffneten Zustand 50 des Sicherungselements 30, 32 durch die erste Öffnung 73 der ersten Endkappe 71 des Filtereinsatzes 70 hindurchgeschoben wird. Dabei stoßen die Außenseiten der beiden Haken 11, 21 an den Rand 75 der ersten Öffnung 73 an. Da der Abstand der beiden Haken 11, 21 voneinander größer ist als der Durchmesser der ersten Öffnung 73, wird durch den Rand 75 der ersten Öffnung 73 das distale Ende 3 des Demontagewerkzeugs 1 mit seinen beiden Armen 10, 20 flexibel nach innen verlagert. Mit anderen Worten: Die beiden Arme 10, 20 werden elastisch reversibel aufeinander zu bewegt, so dass sie die erste Öffnung 73 passieren können. Die elastisch reversible Bewegung nach innen ist durch die beiden Pfeile am ersten Arm 10 und am zweiten Arm 20 angedeutet. Das Sicherungselement 30 befindet sich weiterhin in der geöffneten Stellung 50 bzw. in dem geöffneten Zustand 50. Dadurch kann der erste Arm 10 auf den zweiten Arm 20 zu bewegt werden.

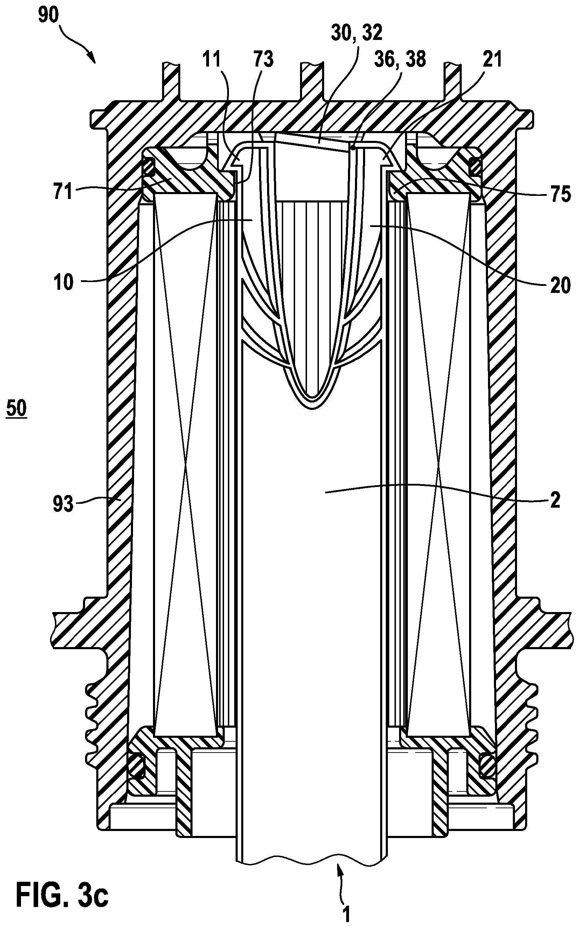

In Figur 3c hat das distale Ende 3 mit seinen beiden Haken 11, 21 die erste Öffnung 73 passiert. Die beiden Arme 10, 20 federn wieder voneinander weg, d.h. nach außen und verrasten hinter dem Rand 75. Nach wie vor befindet sich das Sicherungselement 30, 32 in dem geöffneten Zustand 50.

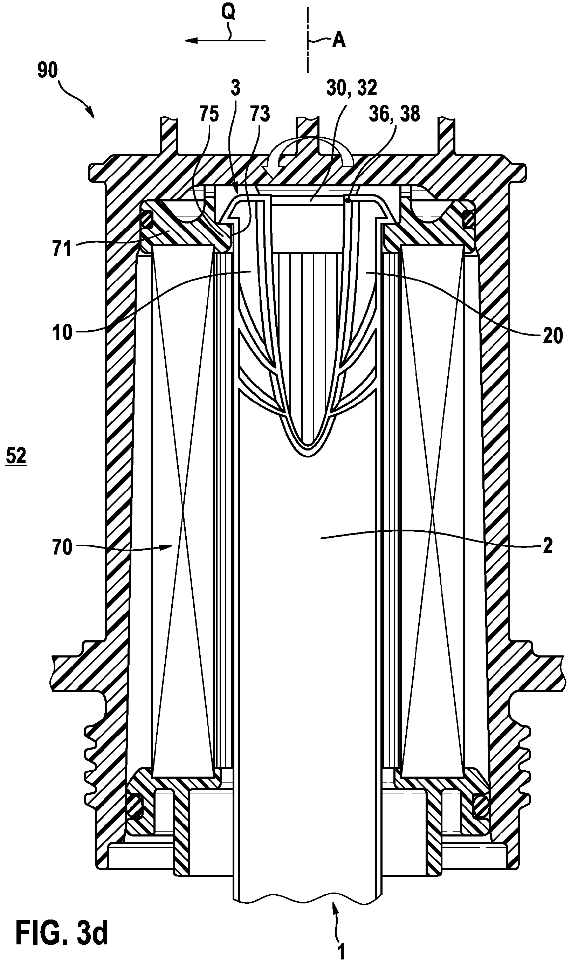

In Figur 3d ist gezeigt, wie das Sicherungselement 30, 32 in den geschlossenen Zustand 52 verlagert wurde - siehe dazu die Bewegungsrichtung des Schließvorgangs, die durch den Pfeil über dem Sicherungselement 30, 32 angedeutet ist. Dies kann beispielsweise dadurch geschehen, dass das Demontagewerkzeug 1 in Figur 3c etwas weiter entlang der Einführrichtung 80 verlagert bzw. geschoben wird, wodurch das Sicherungselement 30, 32 an eine gegenüberliegende Wand anstößt und das Sicherungselement auf diese Weise in den geschlossenen Zustand 52 verlagert wird. Beispielsweise kann das Sicherungselement 30, 32 dabei um ein Drehgelenk 36 gedreht bzw. geschwenkt werden, wobei das Drehgelenk 36 beispielsweise in der Art eines Filmgelenks 38, eines Filmscharniers, eines Schnappspaniers oder eines Scharniers ausgebildet sein kann.

Der in Figur 3d gezeigte geschlossene Zustand 52 bzw. die geschlossene Stellung 52 bewirkt eine Stabilisierung des distalen Endes 3 des Demontagewerkzeugs 1. Durch das nun zwischen dem ersten Arm 10 und dem zweiten Arm 20 angeordnete Sicherungselement 30, 32 ist der erste Arm 10 mit dem zweiten Arm 20 mechanisch gekoppelt. Dadurch wird eine Bewegung des ersten Arms 10 hin zum zweiten Arm 20 entlang der Querrichtung Q blockiert. Auf diese Weise ist ein unbeabsichtigtes Abrutschen oder ein Verwinden des Demontagewerkzeugs 1 von dem Rand 75 der ersten Öffnung 73 der ersten Endkappe 71 des Filtereinsatzes 70 verhindert.

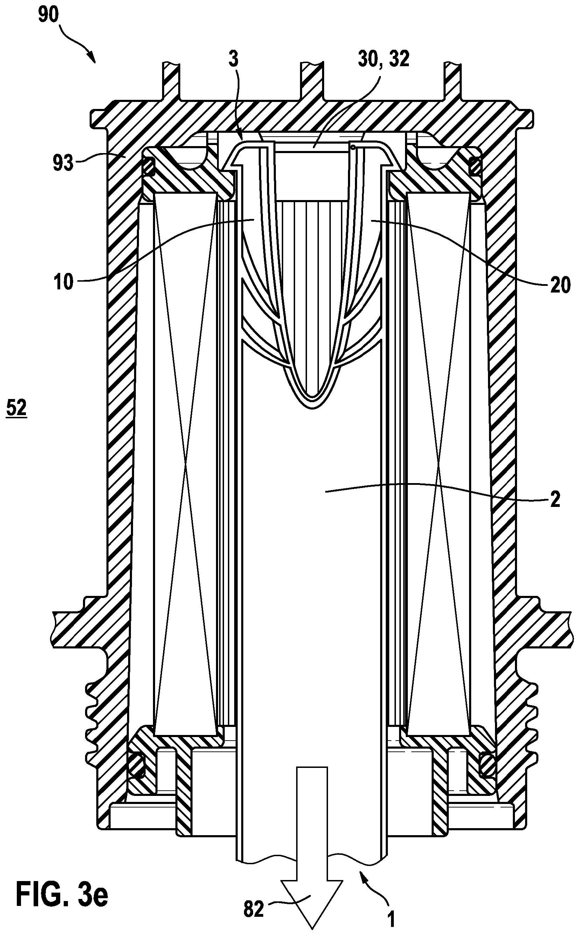

In Figur 3e wird gezeigt, wie durch einen Zug am Demontagewerkzeug 1 in einer Demontagerichtung 82, welche der Einführrichtung 80 entgegengesetzt ist, der Filtereinsatz 70 aus dem Gehäuse 93 des Flüssigkeitsfilters 90 hinausbewegt werden kann. Durch die Versteifung des distalen Endes 3 des Demontagewerkzeugs 1 in Folge des zwischen dem ersten Arm 10 und dem zweiten Arm 20 angeordneten bzw. befindlichen Sicherungselements 30, 32 im geschlossenen Zustand 52 ist auf diese Weise ein sicheres und zuverlässiges Demontieren des Filtereinsatzes 70 möglich. Das Abrutschen des Demontagewerkzeugs 1 vom Rand 75 ist somit unterbunden.

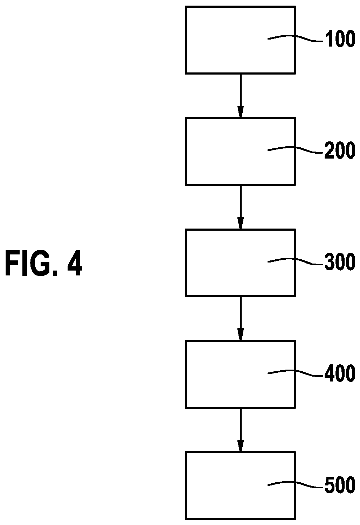

In Fig. 4 ist ein Verfahren zur Demontage eines Filtereinsatzes 70 eines Flüssigkeitsfilters 90 dargestellt. Der Flüssigkeitsfilter 90 umfasst beispielsweise, wie z.B. in den Figuren 3a bis 3e dargestellt, im montierten Zustand ein Gehäuse 93, wenigstens einen Flüssigkeitszulauf 91, wenigstens einen Flüssigkeitsablauf 92 und den Filtereinsatz 70. Der Filtereinsatz 70 umfasst z.B. ein sich entlang einer Längsachse A erstreckendes Filterelement 78, eine erste Endkappe 71 und eine zweite Endkappe 72, wobei das Filterelement 78 entlang der Längsachse A betrachtet zwischen der ersten Endkappe 71 und der zweiten Endkappe 72 angeordnet ist, wobei die erste Endkappe 71 eine erste kanalartige Öffnung 73 aufweist, wobei die zweite Endkappe 72 eine zweite kanalartige Öffnung 74 aufweist. Das Verfahren umfasst die folgenden Schritte:
▪ einen ersten Schritt 100: Bereitstellen eines Demontagewerkzeugs 1;
▪ einen zweiten Schritt 200: Einstellen des Demontagewerkzeugs in einen geöffneten Zustand 50 bzw. in eine geöffnete Stellung 50, wobei im geöffneten Zustand 50 die beiden Arme 10, 20 des Demontagewerkzeugs 1 elastisch reversibel aufeinander zu bewegbar sind;
▪ einen dritten Schritt 300: Einführen des Demontagewerkzeugs 1 in den Filtereinsatz 70 entlang einer Einführrichtung 80 derart, dass das distale Ende 3 des Demontagewerkzeugs 1 zumindest durch die erste Öffnung 72 hindurch geführt ist, bevorzugt durch die zweite Öffnung 74 und durch die erste Öffnung 72 vollständig hindurch geführt ist;
▪ einen vierten Schritt 400: Einstellen des Demontagewerkzeugs 1 in einen Demontagezustand 52 durch Verlagern des Sicherungselements 30, 32, so dass das Sicherungselement zwischen dem ersten Arm 10 und dem zweiten Arm 20 angeordnet ist und bei einer Krafteinwirkung auf einen der Arme 10, 20 hin zu dem anderen Arm 20, 10 eine Bewegung der beiden Arme 10, 20 aufeinander zu blockiert ist;
▪ einen fünften Schritt 500: Verlagern des Demontagewerkzeugs 1 entgegen der Einführrichtung 80, so dass zusammen mit dem Demontagewerkzeug 1 der Filtereinsatz 70 aus dem Gehäuse 93 demontiert wird.

Die dargestellten Demontagewerkzeuge 1 können beispielsweise in einem Kunststoff-Spritzgussprozess hergestellt werden. Sie können beispielsweise aus Polypropylen, Polyamid oder Polyethylen hergestellt sein oder diese Materialien zumindest teilweise aufweisen.

Das vorgestellte Demontagewerkzeug 1 eignet sich für die Demontage von Filtereinsätzen 70 von Flüssigkeitsfiltern 90, beispielsweise für Kraftstofffilter oder Harnstofffilter. Es ist aufgrund seiner Eigenschaften universell, d.h. für verschiedene Typen von Filtereinsätzen 70, einsetzbar, leicht herstellbar, kostengünstig, und erlaubt die zuverlässige Demontage der Filtereinsätze 70 aus einem Gehäuse 93 eines zugehörigen Flüssigkeitsfilters 90.

## Patentansprüche

1. Demontagewerkzeug für einen Filtereinsatz eines Flüssigkeitsfilters,
umfassend
einen Körper (2), der sich entlang einer Längsachse (A) erstreckt,
wobei der Körper (2) an einem distalen Ende (3) einen ersten Arm (10) und einen zweiten Arm (20) aufweist,
wobei sich die beiden Arme (10, 20) im Wesentlichen parallel zur Längsachse (A) erstrecken und voneinander beabstandet sind,
wobei die beiden Arme (10, 20) elastisch reversibel aufeinander zu auslenkbar sind, **dadurch gekennzeichnet, dass**
am ersten Arm (10) ein Sicherungselement (30, 32) angeordnet ist,
wobei in einem geöffneten Zustand (50) des Sicherungselements (30) die beiden Arme (10, 20) aufeinander zu bewegt werden können,
wobei in einem geschlossenen Zustand (52) des Sicherungselements (30, 32) das Sicherungselement (30, 32) die beiden Arme (10, 20) miteinander koppelt und eine Bewegung der beiden Arme (10, 20) aufeinander zu blockiert ist.

2. Demontagewerkzeug nach Anspruch 1,
wobei der erste Arm (10) einen ersten Haken (11) aufweist,
wobei der erste Haken (11) im Wesentlichen quer zur Längsachse (A) vom ersten Arm (10) abragt,
wobei der zweite Arm (20) einen zweiten Haken (21) aufweist,
wobei der zweite Haken (21) im Wesentlichen quer zur Längsachse (A) vom zweiten Arm (20) abragt,
wobei die beiden Haken (11, 21) in entgegengesetzte Richtungen weisen.

3. Demontagewerkzeug nach einem der vorhergehenden Ansprüche,
wobei der Körper (2) flach ausgebildet ist,
wobei eine Gesamtlänge (L) des Körpers (2) wenigstens das 5-fache einer Breite (B) des Körpers (2) beträgt,
wobei die Breite (B) des Körpers (2) wenigstens das 3-fache einer Dicke (D) des Körpers (2) beträgt.

4. Demontagewerkzeug nach einem der vorhergehenden Ansprüche,
wobei das Sicherungselement (30) als ein Bügel (32) oder als Klinke (32) oder als Sperrklinke (32) ausgebildet ist.

5. Demontagewerkzeug nach einem der vorhergehenden Ansprüche,
wobei das Sicherungselement (30, 32) mittels eines Drehgelenks (36) am ersten Arm (10) befestigt ist.

6. Demontagewerkzeug nach dem vorhergehenden Anspruch,
wobei das Drehgelenk (36) als Filmgelenk (38) oder als Scharnier oder als Schnapppscharnier ausgebildet ist.

7. Demontagewerkzeug nach einem der vorhergehenden Ansprüche,
wobei das Sicherungselement (30, 32) derart am ersten Arm (10) angeordnet ist, dass es im geöffneten Zustand (50) nach vorne vom Körper (2) abragt und einen Winkel von maximal 45° zu einer Querrichtung (Q) einschließt,
wobei sich die Querrichtung (Q) senkrecht zur Längsachse (A) erstreckt und/oder
wobei das Sicherungselement (30, 32) derart am ersten Arm (10) angeordnet ist, dass es im geschlossenen Zustand (52) in der Querrichtung (Q) zwischen den beiden Armen (10, 20) verläuft.

8. Demontagewerkzeug nach einem der vorhergehenden Ansprüche,
wobei das Sicherungselement (30, 32) im geschlossenen Zustand (52) mit dem zweiten Arm (20) eine lösbare Verbindung ausbildet,
wobei die Verbindung formschlüssig oder kraftschlüssig oder reibschlüssig ist.

9. Demontagewerkzeug nach einem der vorhergehenden Ansprüche,
wobei eine erste Länge (L1) des ersten Arms (10) von seiner ersten Wurzel (12) am Körper (2) bis zu seinem ersten freien Ende (14) wenigstens das 2,5-fache, bevorzugt wenigstens das 3-fache eines maximalen Abstands (D1) zwischen den beiden Armen (10, 20) beträgt,
und/oder
wobei eine zweite Länge (L2) des zweiten Arms (20) von seiner zweiten Wurzel (22) am Körper (2) bis zu seinem zweiten freien Ende (24) wenigstens das 2,5-fache, bevorzugt wenigstens das 3-fache eines maximalen Abstands (D1) zwischen den beiden Armen (10, 20) beträgt.

10. Verfahren zur Demontage eines Filtereinsatzes eines Flüssigkeitsfilters,
wobei der Flüssigkeitsfilter (90) im montierten Zustand ein Gehäuse (93), wenigstens einen Flüssigkeitszulauf (91), wenigstens einen Flüssigkeitsablauf (92) und den Filtereinsatz (70) umfasst,
wobei der Filtereinsatz (70) ein sich entlang einer Längsachse (A) erstreckendes Filterelement (78), eine erste Endkappe (71) und eine zweite Endkappe (72) umfasst, wobei das Filterelement (78) entlang der Längsachse (A) betrachtet zwischen der ersten Endkappe (71) und der zweiten Endkappe (72) angeordnet ist,
wobei die erste Endkappe (71) eine erste kanalartige Öffnung (73) aufweist, wobei die zweite Endkappe (72) eine zweite kanalartige Öffnung (74) aufweist, wobei das Verfahren die folgenden Schritte umfasst:
-- einen ersten Schritt (100): Bereitstellen eines Demontagewerkzeugs (1) gemäß einem der Ansprüche 1 bis 9;
-- einen zweiten Schritt (200): Einstellen des Demontagewerkzeugs in einen geöffneten Zustand (50), wobei im geöffneten Zustand (50) die beiden Arme (10, 20) des Demontagewerkzeugs (1) elastisch reversibel aufeinander zu bewegbar sind;
-- einen dritten Schritt (300): Einführen des Demontagewerkzeugs (1) in den Filtereinsatz (70) entlang einer Einführrichtung (80) derart, dass das distale Ende (3) des Demontagewerkzeugs (1) durch die zweite Öffnung (74) und durch die erste Öffnung (72) vollständig hindurch geführt ist;
-- einen vierten Schritt (400): Einstellen des Demontagewerkzeugs (1) in einen Demontagezustand (52) durch Verlagern des Sicherungselements (30, 32), so dass das Sicherungselement zwischen dem ersten Arm (10) und dem zweiten Arm (20) angeordnet ist und bei einer Krafteinwirkung auf einen der Arme (10, 20) hin zu dem anderen Arm (20, 10) eine Bewegung der beiden Arme (10, 20) aufeinander zu blockiert ist;
-- einen fünften Schritt (500): Verlagern des Demontagewerkzeugs (1) entgegen der Einführrichtung (80), so dass zusammen mit dem Demontagewerkzeug (1) der Filtereinsatz (70) aus dem Gehäuse (93) demontiert wird.

## Claims

1. Dismounting tool for a filter insert of a liquid filter, comprising
a body (2) which extends along a longitudinal axis (A),
wherein the body (2) has at a distal end (3) a first arm (10) and a second arm (20),
wherein the two arms (10, 20) extend substantially parallel to the longitudinal axis (A) and are spaced apart from one another,
wherein the two arms (10, 20) can be deflected towards one another in an elastically reversible manner,
**characterized in that**
a securing element (30, 32) is arranged on the first arm (10),
wherein, in an open state (50) of the securing element (30), the two arms (10, 20) can be moved towards one another,
wherein, in a closed state (52) of the securing element (30, 32), the securing element (30, 32) couples the two arms (10, 29) to one another and a movement of the two arms (10, 20) towards one another is blocked.

2. Dismounting tool according to Claim 1,
wherein the first arm (10) has a first hook (11),
wherein the first hook (11) projects from the first arm (10) substantially transversely to the longitudinal axis (A),
wherein the second arm (20) has a second hook (21), wherein the second hook (21) projects from the second arm (20) substantially transversely to the longitudinal axis (A),
wherein the two hooks (11, 21) point in opposite directions.

3. Dismounting tool according to either of the preceding claims,
wherein the body (2) is of flat form,
wherein a total length (L) of the body (2) is at least 5 times a width (B) of the body (2),
wherein the width (B) of the body (2) is at least 3 times a thickness (D) of the body (2).

4. Dismounting tool according to one of the preceding claims,
wherein the securing element (30) is in the form of a bar (32) or in the form of a pawl (32) or in the form of a locking pawl (32).

5. Dismounting tool according to one of the preceding claims,
wherein the securing element (30, 32) is fastened to the first arm (10) by means of a rotary joint (36) .

6. Dismounting tool according to the preceding claim,
wherein the rotary joint (36) is in the form of a film joint (38) or in the form of a hinge or in the form of a snap-action hinge.

7. Dismounting tool according to one of the preceding claims,
wherein the securing element (30, 32) is arranged on the first arm (10) in such a way that, in the open state (50), said securing element projects forwards from the body (2) and includes an angle of at most 45° with respect to a transverse direction (Q),
wherein the transverse direction (Q) extends perpendicularly to the longitudinal axis (A), and/or
wherein the securing element (30, 32) is arranged on the first arm (10) in such a way that, in the closed state (52), said securing element extends between the two arms (10, 20) in the transverse direction (Q).

8. Dismounting tool according to one of the preceding claims,
wherein, in the closed state (52), the securing element (30, 32) forms a releasable connection with the second arm (20),
wherein the connection is form-fitting or force-fitting or frictionally engaging.

9. Dismounting tool according to one of the preceding claims,
wherein a first length (L1) of the first arm (10) from its first root (12) on the body (2) to its first free end (14) is at least 2.5 times, preferably 3 times, a maximum distance (D1) between the two arms (10, 20),
and/or
wherein a second length (L2) of the second arm (20) from its second root (22) on the body (2) to its second free end (24) is at least 2.5 times, preferably at least 3 times, a maximum distance (D1) between the two arms (10, 20).

10. Method for dismounting a filter insert of a liquid filter,
wherein, in the mounted state, the liquid filter (90) comprises a housing (93), at least one liquid inflow (91), at least one liquid outflow (92) and the filter insert (70),
wherein the filter insert (70) comprises a filter element (78) which extends along a longitudinal axis (A), a first end cap (71) and a second end cap (72), wherein the filter element (78), as viewed along the longitudinal axis (A), is arranged between the first end cap (71) and the second end cap (72),
wherein the first end cap (71) has a first channel-like opening (73),
wherein the second end cap (72) has a second channel-like opening (74),
wherein the method comprises the following steps:
-- a first step (100): providing a dismounting tool (1) according to one of Claims 1 to 9;
-- a second step (200): setting the dismounting tool into an open state (50), wherein, in the open state (50), the two arms (10, 20) of the dismounting tool (1) can be moved towards one another in an elastically reversible manner;
-- a third step (300): introducing the dismounting tool (1) into the filter insert (70) along an introduction direction (80) in such a way that the distal end (3) of the dismounting tool (1) is guided completely through the second opening (74) and the first opening (72);
-- a fourth step (400): setting the dismounting tool (1) into a dismounting state (52) by displacing the securing element (30, 32) such that the securing element is arranged between the first arm (10) and the second arm (20) and, if a force acts on one of the arms (10, 20) towards the other arm (20, 10), a movement of the two arms (10, 20) towards one another is blocked;
-- a fifth step (500) : displacing the dismounting tool (1) counter to the introduction direction (80) such that the filter insert (70) is dismounted from the housing (93) together with the dismounting tool (1) .

## Revendications

1. Outil de démontage pour un insert filtrant d'un filtre à liquide, comprenant
un corps (2), qui s'étend le long d'un axe longitudinal (A),
le corps (2) comprenant, à une extrémité distale (3), un premier bras (10) et un deuxième bras (20),
les deux bras (10, 20) s'étendant essentiellement parallèlement à l'axe longitudinal (A) et étant espacés l'un de l'autre,
les deux bras (10, 20) pouvant être déviés de manière élastiquement réversible l'un vers l'autre,
**caractérisé en ce que**
un élément de fixation (30, 32) est agencé sur le premier bras (10),
dans un état ouvert (50) de l'élément de fixation (30), les deux bras (10, 20) pouvant se déplacer l'un vers l'autre,
dans un état fermé (52) de l'élément de fixation (30, 32), l'élément de fixation (30, 32) couplant les deux bras (10, 20) l'un avec l'autre et un déplacement des deux bras (10, 20) l'un vers l'autre étant bloqué.

2. Outil de démontage selon la revendication 1,
le premier bras (10) comprenant un premier crochet (11),
le premier crochet (11) faisant saillie du premier bras (10) essentiellement transversalement à l'axe longitudinal (A),
le deuxième bras (20) comprenant un deuxième crochet (21),
le deuxième crochet (21) faisant saillie du deuxième bras (20) essentiellement transversalement à l'axe longitudinal (A),
les deux crochets (11, 21) étant orientés dans des directions opposées.

3. Outil de démontage selon l'une quelconque des revendications précédentes,
le corps (2) étant configuré sous forme plate,
une longueur totale (L) du corps (2) étant d'au moins 5 fois une largeur (B) du corps (2),
la largeur (B) du corps (2) étant d'au moins 3 fois une épaisseur (D) du corps (2).

4. Outil de démontage selon l'une quelconque des revendications précédentes,
l'élément de fixation (30) étant configuré sous la forme d'un étrier (32) ou sous la forme d'un cliquet (32) ou sous la forme d'un cliquet d'arrêt (32).

5. Outil de démontage selon l'une quelconque des revendications précédentes,
l'élément de fixation (30, 32) étant attaché au premier bras (10) au moyen d'une articulation tournante (36).

6. Outil de démontage selon la revendication précédente,
l'articulation tournante (36) étant configurée sous la forme d'une articulation pelliculaire (38) ou sous la forme d'une charnière ou sous la forme d'une charnière à déclic.

7. Outil de démontage selon l'une quelconque des revendications précédentes,
l'élément de fixation (30, 32) étant agencé sur le premier bras (10) de telle sorte qu'à l'état ouvert (50), il fait saillie du corps (2) vers l'avant et forme un angle d'au plus 45° par rapport à une direction transversale (Q),
la direction transversale (Q) s'étendant perpendiculairement à l'axe longitudinal (A),
et/ou
l'élément de fixation (30, 32) étant agencé sur le premier bras (10) de telle sorte qu'à l'état fermé (52), il s'étend dans la direction transversale (Q) entre les deux bras (10, 20).

8. Outil de démontage selon l'une quelconque des revendications précédentes,
l'élément de fixation (30, 32) formant une connexion amovible avec le deuxième bras (20) à l'état fermé (52),
la connexion étant par accouplement de forme ou par accouplement de force ou par friction.

9. Outil de démontage selon l'une quelconque des revendications précédentes,
une première longueur (L1) du premier bras (10) depuis sa première racine (12) sur le corps (2) jusqu'à sa première extrémité libre (14) étant d'au moins 2,5 fois, de préférence d'au moins 3 fois, une distance maximale (D1) entre les deux bras (10, 20),
et/ou
une deuxième longueur (L2) du deuxième bras (20) depuis sa deuxième racine (22) sur le corps (2) jusqu'à sa deuxième extrémité libre (24) étant d'au moins 2,5 fois, de préférence d'au moins 3 fois, une distance maximale (D1) entre les deux bras (10, 20).

10. Procédé de démontage d'un insert filtrant d'un filtre à liquide,
le filtre à liquide (90) comportant, à l'état monté, un boîtier (93), au moins une entrée de liquide (91), au moins une sortie de liquide (92) et l'insert filtrant (70),
l'insert filtrant (70) comportant un élément filtrant (78) s'étendant le long d'un axe longitudinal (A), une première coiffe d'extrémité (71) et une deuxième coiffe d'extrémité (72),
l'élément filtrant (78) étant agencé le long de l'axe longitudinal (A) entre la première coiffe d'extrémité (71) et la deuxième coiffe d'extrémité (72),
la première coiffe d'extrémité (71) comprenant une première ouverture de type canal (73),
la deuxième coiffe d'extrémité (72) comprenant une deuxième ouverture de type canal (74),
le procédé comprenant les étapes suivantes :
-- une première étape (100) : la fourniture d'un outil de démontage (1) selon l'une quelconque des revendications 1 à 9 ;
-- une deuxième étape (200) : l'ajustement de l'outil de démontage dans un état ouvert (50), dans l'état ouvert (50), les deux bras (10, 20) de l'outil de démontage (1) pouvant être déplacés de manière élastiquement réversible l'un vers l'autre ;
-- une troisième étape (300) : l'insertion de l'outil de démontage (1) dans l'insert filtrant (70) le long d'une direction d'insertion (80) de telle sorte que l'extrémité distale (3) de l'outil de démontage (1) traverse entièrement la deuxième ouverture (74) et la première ouverture (72) ;
-- une quatrième étape (400) : l'ajustement de l'outil de démontage (1) dans un état de démontage (52) par transfert de l'élément de fixation (30, 32) de telle sorte que l'élément de fixation est agencé entre le premier bras (10) et le deuxième bras (20) et que, lorsqu'une force est exercée sur un des bras (10, 20) vers l'autre bras (20, 10), un déplacement des deux bras (10, 20) l'un vers l'autre est bloqué ;
-- une cinquième étape (500) : le transfert de l'outil de démontage (1) à l'encontre de la direction d'insertion (80) de telle sorte que l'insert filtrant (70) est démonté hors du boîtier (93) conjointement avec l'outil de démontage (1).
